# EUROPEAN PATENT SPECIFICATION

(11) **EP 1 339 559 B1**
(45) Date of publication and mention of the grant of the patent: **09.02.2005**
(21) Application number: 01981233.8
(22) Date of filing: 30.10.2001
(51) Int. Cl.: B60K 17/348, B60K 28/16, B60K 17/35

(54) **MOTOR VEHICLE AND A METHOD FOR PROPELLING THE SAME**
KRAFTFAHRZEUG UND VERFAHREN ZU DESSEN ANTRIEB
VEHICULE A MOTEUR ET SON PROCEDE DE PROPULSION

(30) Priority: 31.10.2000 SE 0003976
(43) Date of publication of application: 03.09.2003
(73) Proprietor: SAAB AUTOMOBILE AKTIEBOLAG, 461 80 Trollhättan (SE)
(72) Inventor: GUSTAVSSON, Ferdinand, S-463 75 HJÄRTUM (SE)
(74) Representative: Stein, Jan Anders Lennart
(86) International application number: PCT/SE2001/002376
(87) International publication number: WO 2002/036383

(56) References cited:
- US-A- 4 889 204
- US-A- 5 259 476
- US-A- 5 262 950
- US-A- 5 265 020
- US-A- 5 742 917

## Description

### Background of the invention

The invention relates partly to a method for driving a motor vehicle, according to the preamble of claim 1, and partly to a motor vehicle, according to the preamble of claim 8.

### Description of the prior art

A general problem in motor vehicles of the passenger car type is how to achieve good stability and performance together with safe handling of the vehicle in different driving situations and in all road conditions. It is becoming increasingly more common, therefore, to provide vehicles with various types of traction control, which is intended to prevent the drive wheels from slipping on the road surface, thereby adversely affecting the stability of the vehicle. It is also becoming increasingly more common to provide the vehicle with the facility for driving all four wheels in order to improve further the performance and driving safety in different road conditions. A common method of counteracting wheel slip in the case of a driving wheel is to use the vehicle braking system in such instances in order to brake the wheel in question to the necessary extent.

Vehicles are furthermore provided with various types of electronic stabilization systems, in which the movement of the vehicle is registered by various sensors and the driver is aided by a control system, which on the basis of signals from the said sensors automatically adjusts the brake force acting on different wheels in order to stabilize the handling of the vehicle.

One disadvantage with this known system is that stabilization of the vehicle handling makes it necessary to apply the braking action to different wheels, thereby making it difficult to achieve optimal driving of the vehicle without unnecessary energy losses.

A torque distribution control system of a four wheel drive system is known from US 5 742 917 A, which discloses all features of the preamble of claims 1 and 8.

### Object of the invention

The object of the invention is to improve the driving of a vehicle with four-wheel drive, without unnecessary energy losses.

Yet another object is to achieve an appropriate distribution of tractive effort between the different wheels of the vehicle by simple means. A further object is to make driving easier for the driver in various situations.

### Summary of the invention

The object of the invention is achieved partly by means of a method having the characteristics specified in claim 1, and partly by means of a motor vehicle having the characteristics specified in claim 8.

Making it possible to automatically redistribute torque between the various wheels as a function of the current road surface and desired drive mode ensures that the road contact on different wheels available in each situation is optimized to the benefit of the vehicle without the need to apply braking to any wheel. This enables the vehicle, when underway, to make optimum and safest possible use of the available road adhesion in order to fulfil the driver's intentions.

It is furthermore possible, by means of the control system, to influence and select various driving characteristics of the vehicle, such as selecting between oversteer and understeer in different situations, for example.

Further characteristics and advantages of the invention are set out in the description below and in other claims.

The invention will be explained in more detail below with the aid of exemplary embodiments shown in the drawings attached.

### Description of the drawings

In the drawing:
Fig.1 shows a schematic diagram of a vehicle according to the invention,
Fig. 2 shows a diagrammatic view of the front differential in the vehicle in fig. 1,
Fig. 3 shows a diagrammatic view of the final drive unit in the rear axle of the vehicle in fig. 1, and
Fig. 4 shows a diagrammatic illustration of a driving situation with differing road adhesion on different wheels.

### Description of the preferred embodiments

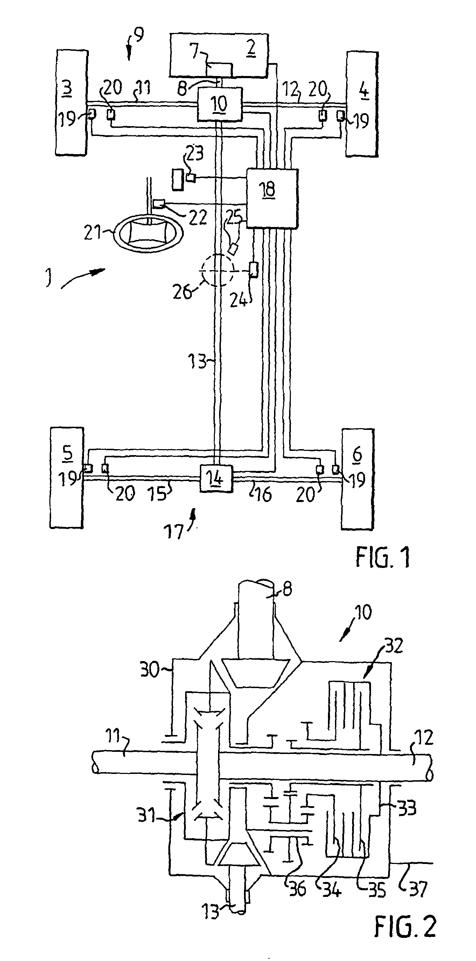

A motor vehicle 1 according to the invention shown in fig. 1 is provided with a front-mounted engine 2 for driving two front wheels 3, 4 and two rear wheels 5, 6. The engine 2 is connected by way of a gearbox 7 and a first drive shaft 8 emerging therefrom to a differential 10 fitted to the front axle 9 of the vehicle, the differential in turn driving the front wheels 3, 4 by way of shafts 11, 12. In parallel with the differential 10, the rear wheels 5, 6 are also driven by way of a second drive shaft 13, which is connected to a final drive unit 14, which is connected to the rear wheels 5, 6 by way of shafts 15, 16 and clutches that form part of the rear axle 17 of the vehicle.

A control unit 18, to which the engine 2, the differential 10 and the final drive unit 14 are connected, is arranged in the motor vehicle 1. Wheel speed sensors 19 and/or wheel torque sensors, at least one on each wheel, and level sensors 20, suitably at least one each on the front axle 9 and the rear axle 17, are furthermore connected to the control unit 18. In addition, a steering wheel angle sensor 22 arranged on the vehicle's steering wheel 21 and an accelerator pedal sensor 23, which is arranged on the vehicle's accelerator and which registers the magnitude of the torque that the driver requires from the engine, are connected to the control unit 18, as are also a lateral acceleration sensor 24 fitted in the vehicle and a yaw velocity sensor 25. The lateral acceleration sensor 24 and the yaw velocity sensor 25 are best fitted close to the normal location of the vehicle's center of gravity 26, in order to provide the most accurate possible information on the movement of the vehicle.

By means of input signals from the various sensors 19, 20, 22-25, the control system 18 receives information on the current driving situation and on the basis of this is able to calculate the vehicle movement desired by the driver, as when cornering, for example. The control unit 18 can in turn act upon the engine 2, the differential 10 and the final drive unit 14, and can control these so that the vehicle behaves safely in a well-controlled manner and utilizes the prevailing road adhesion well.

It is possible, by means of the differential 10 and the final drive unit 14, to distribute the torque delivered by the engine 2 between the wheels 3-6 of the vehicle in proportion to the frictional force that can be transmitted to each wheel in a given driving situation. Through appropriate control of the engine 2, the differential 10 and the final drive unit 14, it is possible to reduce the torque on any of the wheels to a level free of wheel slip without the need for braking of the wheel in question, as would be the usual method of limiting or preventing wheel slip.

The specific embodiment of a suitable type of differential 10 is shown diagrammatically in fig 2, but differently constructed differentials of other designs are also conceivable. The differential 10 shown is of a type known in the art, which is marketed by the company Mitsubishi Motors under the name "Torque transfer differential". A housing 30 contains a differential unit 31 of conventional type, by way of which the first drive shaft 8 drives the second drive shaft 13 and the two shafts 11, 12 to the front wheels 3, 4. The shafts 11, 12 can thereby rotate at different speeds when cornering, for example. To the right of the drawing a clutch element 32 is arranged on the shaft 12, this element serving to increase or reduce the rotational speed of the shaft 12 in relation to the speed of the shaft 11, with the aim of varying the torque distribution between these shafts. This is achieved by means of a housing 33 fixed to the shaft 12, inside which housing a first clutch plate 34 and a second clutch plate 35 rotate at different speeds, driven by the differential unit 31 via a geared intermediate shaft 36. By means of an electro-hydraulic arrangement, not shown in more detail here but controlled by the control unit 18 by way of a line 37, it is possible to lock either of the two clutch plates 34, 35 fully or partially in relation to the housing 33, in order to distribute the torque as required between the shafts 11, 12. When the right-hand clutch plate 35 is brought into engagement, torque is transferred to the shaft 12, whereas when the left-hand clutch plate 34 is brought into engagement, torque is transferred to the shaft 11. The desired redistribution of the torque can be achieved by varying the degree of engagement.

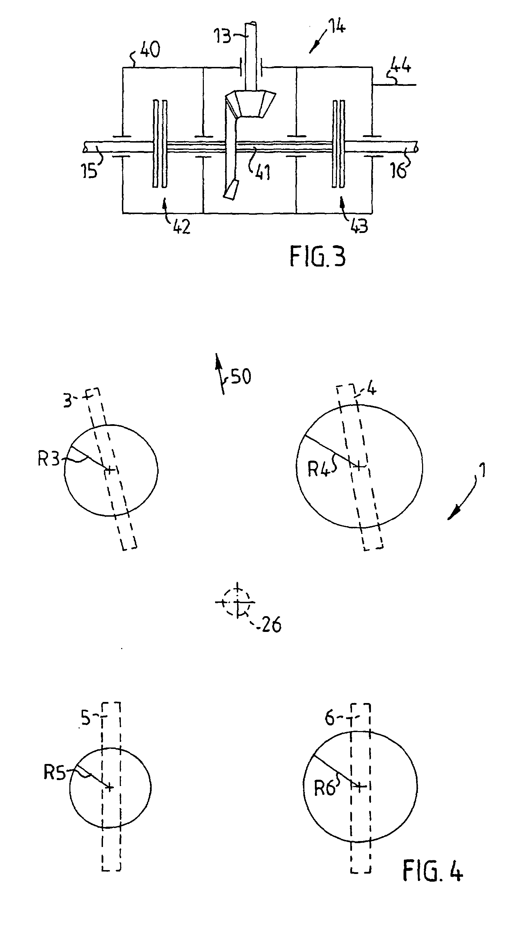

The precise embodiment of a suitable type of final drive unit 14 is shown in diagrammatic form in fig. 3, but differently constructed final drives of other designs are also conceivable. The final drive unit 14 shown is of a type known in the art, which is marketed by the company Borg Warner under the name "Interactive Torque Management II" (ITM II). Supported in a housing 40 is a shaft 41, which is driven by the second drive shaft 13 by way of a gear. The shaft 41 is connected by way of slip clutches 42, 43 to the shafts 15, 16 respectively. The said slip clutches are operated and controlled electro-hydraulically in a manner not shown in further detail here, by way of a line 44 from the control unit 18. Depending on the selected degree of engagement of the two slip clutches 42, 43, the torque from the second drive shaft 13 can be distributed as required to the two rear wheels 5, 6. In order to permit torque transmission to the shafts 15, 16 it is important that the gearing for the second drive shaft 13 be selected so that it rotates faster than the shafts 15, 16, that is to say so that the slip is positive and the torque is directed in the same direction as in the first drive shaft 8. When neither of the slip clutches 42, 43 is engaged, the drive is solely to the front wheels.

With the system described above the drive is connected to one of the wheels 3, 4 on the front axle 9 at all times, whereas it is possible to select when and how the rear axle 17 and its wheels 5, 6 are to be connected. This makes it possible to distribute the torque efficiently between different wheels of the vehicle in proportion to the current traction of the various wheels in different driving situations. The traction of a wheel is determined here, for example, by the road surface, wheel load, lateral force, etc.

With the aid of information from the various sensors on the vehicle, the control unit 18 obtains information on how the vehicle and its various wheels perform in a given situation and knows, from the information, such as the amount of throttle and steering wheel angle, which is fed in as the driver maneuvers the vehicle, how the driver wishes the vehicle to perform. In this way the control unit 18 can determine the current forces acting on each wheel and can adjust the torque on each wheel so as to get the optimum traction and performance from the vehicle. It is thereby no longer necessary, as previously, to bring about the braking of one wheel in order to limit the torque when wheel slip occurs in slippery conditions, for example. Instead, the available torque can be redistributed between the wheels in order to achieve optimum propulsion. Here, it may be necessary in difficult road conditions to limit the total available torque by reducing the engine throttle. This can best be done automatically by means of the control unit 18.

An example of a driving situation with different wheel loading is shown in fig. 4, in which in the drawing a motor vehicle 1 is travelling in the direction of the arrow 50 on a left-hand bend. The two front wheels 3, 4 are here swiveled at a certain angle to the left by a turn of the steering wheel in order to steer the vehicle on a left-hand bend. At the same time the vehicle has a tendency to lean outwards on the bend so that the load on the outer wheels 4, 6 increases and the load on the inner wheels 3, 5 diminishes. The degree of inclination of the vehicle depends, among other things, on the speed of the vehicle and the radius of the bend. The wheel load is here represented by circles on the various wheels, the size of the radii R3, R4, R5, R6 of the circles representing the magnitude of the wheel load on each wheel. In this case the wheel load diminishes in the wheel order 4, 6, 3 and 5. The wheel load is therefore greatest on the front-right wheel 4 and smallest on the rear-left wheel 5.

The occurrence of a lateral force on a wheel in a known manner limits the tractive effort that can be obtained on a wheel for a given coefficient of friction with the road surface, something which the control unit 18 is continuously analyzing whilst underway. By means of the wheel speed sensors 19, the control unit 18 is also keeping track of when the various wheels begin to spin free of the road surface and in this way can determine the magnitude of the torque that can be delivered to each wheel without slipping.

Travelling in a straight line on a dry road, for example, the drive needs to be connected to the rear wheels only when strong acceleration is required, but normally the drive to the rear wheels can be disengaged. The control unit 18 here determines when to engage and disengage the drive. Similarly the control unit 18 monitors what drive is required to the various wheels in other driving situations.

Through suitable programming of the control unit 18 it is also possible to give the vehicle special handling characteristics and thereby to select how the vehicle will perform in different driving situations. It is possible, for example, by boosting the torque to the outer wheels, to make a vehicle that normally understeers less susceptible to understeer in special situations. Many other possibilities relating to torque distribution are available here within the scope of the invention, depending on needs and requirements. It is thus possible to make the work of the driver easier, and the vehicle safer.

The description above relates basically to a front-wheel drive car with front-mounted engine. The opposite case is also conceivable, that is to say an essentially rear-wheel drive car in which the differential 10 is fitted to the rear axle and the final drive 14 to the front axle.

It is possible, without departing from the scope of the invention, to modify the solution described above in a number of different ways according to needs and requirements. Thus, for example, the torque distribution and the equipment used may differ in various respects.

## Claims

1. A method for driving a motor vehicle with four driveable wheels (3-6), two on a front axle (9) and two on a rear axle (17), distributing engine torque between different wheels, whilst underway, with regard to the road adhesion prevailing on those wheels, **characterized in that** in a given, current driving situation it is determined on which of the four wheels (3-6) driving is required or is possible, depending on this situation driving of the wheels on the front (9) or rear (17) axle is prioritized, and only if driving of wheels on only one of these axles is insufficient, driving of wheels also on the other axle is selected, and when driving wheels also on the other axle, a required or desired torque is distributed between the wheels on this axle with regard to the road adhesion prevailing on those wheels.

2. The method as claimed in claim 1, **characterized in that** a required or desired torque on the axle prioritized is distributed between the wheels on this axle with regard to the road adhesion prevailing on those wheels.

3. The method as claimed in claim 1, **characterized in that** the driving of the wheels on the front axle (9) is prioritized.

4. The method as claimed in any of claims 1 to 3, **characterized in that** in the event of relative change in the prevailing road adhesion on various wheels a redistribution of the torque between the wheels is undertaken.

5. The method as claimed in any of claims 1 to 4, **characterized in that** the redistribution of the torque between the wheels is undertaken without braking on any wheel.

6. The method as claimed in any of claims 1 to 5, **characterized in that** the prevailing road adhesion on different wheels is determined on the basis of how the vehicle moves and how the wheels rotate.

7. The method as claimed in any of claims 1 to 6, **characterized in that** a control unit (18) arranged in the vehicle monitors whether the torque demanded by the driver is inadmissibly high for the current driving situation, and **in that** if the torque demanded is inadmissibly high the control unit reduces the torque to a permitted level by reducing the engine (2) throttle.

8. A motor vehicle with four driveable wheels (3-6), two on a front axle (9) and two on a rear axle (17), in which vehicle there is a control unit (18), which by way of various sensors (19,20,22-25) on the vehicle obtains information on the current driving situation and which is designed, on the basis of information received from the sensors, to deliver control signals to control elements (2,10,14) arranged on the vehicle, for distributing engine torque between different wheels with regard to the road adhesion prevailing on those wheels, **characterized in that** the control unit (18) is designed, whilst underway, to determine in a given, current driving situation, on which of four wheels driving is required or is possible, and to prioritize driving of wheels on either the front axle or the rear axle, and to select driving of wheels also on the other axle only if driving of the wheels on only one of the axles is insufficient, and when selecting driving of wheels also on the other axle distributing a required or desired torque on this axle between the wheels on this axle with regard to the road adhesion prevailing on those wheels.

9. The motor vehicle as claimed in claim 8, **characterized in that** the control unit (18) is designed to distribute required or desired torque on the prioritized axle between the wheels on this axle with regard to the road adhesion prevailing on those wheels.

10. The motor vehicle as claimed in claim 9, **characterized in that** the control system is designed to prioritize the driving of the wheels on the front axle (9).

11. The motor vehicle as claimed in claim 10, **characterized in that** the front axle (9) of the vehicle is provided with a differential (10), which is connected by way of a first drive shaft (8) to the engine (2), and which is designed to be capable of distributing input torque from the engine between the front wheels (3, 4) of the vehicle in proportion to the road adhesion prevailing on those wheels.

12. The motor vehicle as claimed in claim 11, **characterized in that** a second drive shaft (13) for driving the rear wheels (5, 6) of the vehicle emerges from the differential (10), and that the second drive shaft (13) is connected by way of a final drive unit (14) to said rear wheels.

13. The motor vehicle as claimed in claim 12, **characterized in that** the final drive unit (14) comprises two clutches (42, 43), which are each connected to a rear wheel (5, 6), and are designed to transmit torque to each wheel respectively in proportion to the degree of engagement in the relevant clutch.

14. The motor vehicle as claimed in claim 13, **characterized in that** the gearing for the second drive shaft (13) is selected so that the second drive shaft rotates faster than the shafts (15, 16) to the rear wheels (5, 6), so that the torque is directed in the same direction as on the first drive shaft (8).

15. The motor vehicle as claimed in any of claims 8 to 14, **characterized in that** a steering wheel angle sensor (22) and an accelerator pedal sensor (23) are connected to the control unit (18) for input of the driver's intentions whilst driving.

16. The motor vehicle as claimed in any of claims 8 to 15, **characterized in that** at least one of the following types of sensor is connected to the control unit (18): wheel speed sensor (19), wheel torque sensor, level sensor (20), lateral acceleration sensor (24) and yaw angle sensor (25), for input of the current behavior of the vehicle into the control unit.

17. The motor vehicle as claimed in any of claims 8 to 16, **characterized in that** the control unit (18) is connected to the engine (2) for controlling the torque delivered by the latter.

## Patentansprüche

1. Verfahren zum Antreiben eines Kraftfahrzeugs mit vier antreibbaren Rädern (3-6), zwei an einer Vorderachse (9) und zwei an einer Hinterachse (17), bei dem Motordrehmoment im Fluss auf verschiedene Räder im Hinblick auf die an diesen Rädern vorherrschende Straßenhaftung verteilt wird,
**dadurch gekennzeichnet, dass** in einer gegebenen aktuellen Fahrsituation ermittelt wird, an welchem der vier Räder (3-6) ein Antreiben erforderlich oder möglich ist, ein Antreiben der Räder an der Vorder- (9) oder der Hinterachse (17) in Abhängigkeit dieser Situation priorisiert wird und nur dann, wenn ein Antreiben von Rädern an nur einer dieser Achsen unzureichend ist, ein Antreiben von Rädern auch an der anderen Achse ausgewählt wird, und dann, wenn Räder auch an der anderen Achse angetrieben werden, ein erforderliches oder gewünschtes Drehmoment auf die Räder an dieser Achse im Hinblick auf die an diesen Rädern vorherrschende Straßenhaftung verteilt wird.

2. Verfahren nach Anspruch 1,
**dadurch gekennzeichnet, dass** ein an der priorisierten Achse erforderliches oder gewünschtes Drehmoment auf die Räder an dieser Achse im Hinblick auf die an diesen Rädern vorherrschende Straßenhaftung verteilt wird.

3. Verfahren nach Anspruch 1,
**dadurch gekennzeichnet, dass** das Antreiben der Räder an der Vorderachse (9) priorisiert wird.

4. Verfahren nach einem der Ansprüche 1 bis 3,
**dadurch gekennzeichnet, dass** im Fall einer relativen Änderung der vorherrschenden Straßenhaftung an verschiedenen Rädern eine Neuverteilung des Drehmoments auf die Räder erfolgt.

5. Verfahren nach einem der Ansprüche 1 bis 4,
**dadurch gekennzeichnet, dass** die Neuverteilung des Drehmoments auf die Räder ohne einen Bremsvorgang an einem Rad erfolgt.

6. Verfahren nach einem der Ansprüche 1 bis 5,
**dadurch gekennzeichnet, dass** die an verschiedenen Rädern vorherrschende Straßenhaftung bestimmt wird auf der Grundlage, wie sich das Fahrzeug bewegt und wie sich die Räder drehen.

7. Verfahren nach einem der Ansprüche 1 bis 6,
**dadurch gekennzeichnet, dass** eine in dem Fahrzeug angeordnete Steuereinheit (18) überwacht, ob das durch den Fahrer angeforderte Drehmoment für die aktuelle Fahrsituation unzulässig hoch ist, und dass die Steuereinheit das Drehmoment durch Reduzierung der Drosselklappe des Motors (2) auf ein zulässiges Niveau verringert, wenn das angeforderte Drehmoment unzulässig hoch ist.

8. Kraftfahrzeug mit vier antreibbaren Rädern (3-6), zwei an einer Vorderachse (9) und zwei an einer Hinterachse (17), wobei in dem Fahrzeug eine Steuereinheit (18) vorhanden ist, die durch verschiedene Sensoren (19, 20, 22-25) an dem Fahrzeug Informationen über die aktuelle Fahrsituation erhält und die dazu eingerichtet ist, auf der Basis der von den Sensoren erhaltenen Informationen Steuersignale an an dem Fahrzeug angeordnete Steuerelemente (2, 10, 14) zu senden, um ein Motordrehmoment auf verschiedene Räder im Hinblick auf die an diesen Rädern vorherrschende Straßenhaftung zu verteilen,
**dadurch gekennzeichnet, dass** die Steuereinheit (18) dazu eingerichtet ist, unterwegs in einer gegebenen aktuellen Fahrsituation zu bestimmen, an welchem der vier Räder ein Antreiben erforderlich oder möglich ist, und ein Antreiben von Rädern entweder an der Vorderachse oder der Hinterachse zu priorisieren und ein Antreiben von Rädern auch an der anderen Achse nur dann zu auswählen, wenn ein Antreiben der Räder an nur einer der Achsen unzureichend ist, und dann, wenn ein Antreiben der Räder auch an der anderen Achse ausgewählt wird, ein an dieser Achse erforderliches oder gewünschtes Drehmoment auf die Räder an dieser Achse im Hinblick auf die an diesen Rädern vorherrschende Straßenhaftung zu verteilen.

9. Kraftfahrzeug nach Anspruch 8,
**dadurch gekennzeichnet, dass** die Steuereinheit (18) dazu eingerichtet ist, ein an der priorisierten Achse erforderliches oder gewünschtes Drehmoment auf die Räder an dieser Achse im Hinblick auf die an diesen Rädern vorherrschende Straßenhaftung zu verteilen.

10. Kraftfahrzeug nach Anspruch 9,
**dadurch gekennzeichnet, dass** das Steuersystem dazu eingerichtet ist, das Antreiben der Räder an der Vorderachse (9) zu priorisieren.

11. Kraftfahrzeug nach Anspruch 10,
**dadurch gekennzeichnet, dass** die Vorderachse (9) des Fahrzeugs mit einem Differential (10) versehen ist, das durch eine erste Antriebswelle (8) mit dem Motor (2) verbunden und so gestaltet ist, dass es dazu in der Lage ist, ein Eingangsdrehmoment von dem Motor auf die Vorderräder (3, 4) des Fahrzeugs im Verhältnis zu der an diesen Rädern vorherrschenden Straßenhaftung zu verteilen.

12. Kraftfahrzeug nach Anspruch 11,
**dadurch gekennzeichnet, dass** sich eine zweite Antriebswelle (13) zum Antreiben der Hinterräder (5, 6) des Fahrzeugs aus dem Differential (10) erstreckt und dass die zweite Antriebswelle (13) durch eine Achsantriebseinheit (14) mit den Hinterrädern verbunden ist.

13. Kraftfahrzeug nach Anspruch 12,
**dadurch gekennzeichnet, dass** die Achsantriebseinheit (14) zwei Kupplungen (42, 43) umfasst, die jeweils mit einem Hinterrad (5, 6) verbunden und dazu eingerichtet sind, Drehmoment auf jedes Rad im Verhältnis zu dem Maß an Eingriff in der betreffenden Kupplung zu übertragen.

14. Kraftfahrzeug nach Anspruch 13,
**dadurch gekennzeichnet, dass** die Übersetzung für die zweite Antriebswelle (13) so gewählt ist, dass sich die zweite Antriebswelle schneller dreht als die Wellen (15, 16) zu den Hinterrädern (5, 6), so dass das Drehmoment in der gleichen Richtung gerichtet ist, wie an der ersten Antriebswelle (8).

15. Kraftfahrzeug nach einem der Ansprüche 8 bis 14,
**dadurch gekennzeichnet, dass** ein Lenkradwinkelsensor (22) und ein Gaspedalsensor (23) mit der Steuereinheit (18) verbunden sind, um während der Fahrt die Absichten des Fahrers einzugeben.

16. Kraftfahrzeug nach einem der Ansprüche 8 bis 15,
**dadurch gekennzeichnet, dass** mindestens einer der folgenden Typen von Sensoren mit der Steuereinheit (18) verbunden ist: Raddrehzahlsensor (19), Raddrehmomentsensor, Niveausensor (20), Querbeschleunigungssensor (24) und Gierwinkelsensor (25) zum Eingeben des aktuellen Verhaltens des Fahrzeugs in die Steuereinheit.

17. Kraftfahrzeug nach einem der Ansprüche 8 bis 16,
**dadurch gekennzeichnet, dass** die Steuereinheit (18) zum Steuern des vom Motor (2) gelieferten Drehmoments mit letzterem verbunden ist.

## Revendications

1. Procédé de propulsion d'un véhicule à moteur ayant quatre roues motrices (3-6), deux sur un essieu avant (9) et deux sur un essieu arrière (17), répartissant le couple du moteur entre les différentes roues, en marche, par rapport à l'adhérence à la route qui prévaut sur ces roues, **caractérisé en ce que**, dans une situation de conduite actuelle donnée, il est déterminé sur lesquelles des quatre roues (3-6) la traction est nécessaire ou possible, en fonction de cette situation on rend prioritaire la traction sur les roues de l'essieu avant (9) ou arrière (17), et seulement si la traction des roues sur un seul de ces essieux est insuffisante, la traction des roues aussi sur l'autre essieu est choisie, et lors de la traction des roues aussi sur l'autre essieu, un couple nécessaire ou souhaité est réparti entre les roues de cet essieu par rapport à l'adhérence à la route qui prévaut sur ces roues.

2. Procédé selon la revendication 1, **caractérisé en ce qu'**un couple nécessaire ou souhaité sur l'essieu rendu prioritaire est réparti entre les roues de cet essieu par rapport à l'adhérence à la route qui prévaut sur ces roues.

3. Procédé selon la revendication 1, **caractérisé en ce que** la traction des roues de l'essieu avant (9) est rendue prioritaire.

4. Procédé selon l'une quelconque des revendications 1 à 3, **caractérisé en ce que**, dans le cas d'un changement relatif de l'adhérence à la route prévalant sur diverses roues, une redistribution du couple entre les roues est prise en charge.

5. Procédé selon l'une quelconque des revendications 1 à 4, **caractérisé en ce que** la redistribution du couple entre les roues est prise en charge en ne freinant sur aucune des roues.

6. Procédé selon l'une quelconque des revendications 1 à 5, **caractérisé en ce que** l'adhérence à la route prévalant sur différentes roues est déterminée d'après la façon dont le véhicule se déplace et d'après la façon dont les roues tournent.

7. Procédé selon l'une quelconque des revendications 1 à 6, **caractérisé en ce qu'**une unité de commande (18) montée dans le véhicule surveille si le couple demandé par le conducteur est excessivement élevé pour la situation de conduite actuelle, et **en ce que**, si le couple demandé est excessivement élevé, l'unité de commande réduit le couple à un niveau permis en réduisant l'ouverture des gaz du moteur (2).

8. Véhicule à moteur ayant quatre roues motrices (3-6), deux sur un essieu avant (9) et deux sur un essieu arrière (17), ledit véhicule comportant une unité de commande (18) qui, à l'aide de divers capteurs (19, 20, 22-25) montés dans le véhicule, obtient des informations sur la situation de conduite actuelle et qui est conçue pour délivrer, d'après les informations fournies par les capteurs, des signaux de commande servant à commander des éléments (2, 10, 14) montés dans le véhicule, pour répartir le couple du moteur entre les différentes roues par rapport à l'adhérence à la route qui prévaut sur ces roues, **caractérisé en ce que** l'unité de commande (18) est conçue pour déterminer, en marche, dans une situation de conduite actuelle donnée, sur lesquelles des quatre roues la traction est nécessaire ou possible, et pour rendre prioritaire la traction des roues soit de l'essieu avant soit de l'essieu arrière, et pour choisir la traction des roues aussi sur l'autre essieu seulement si la traction des roues sur un seul de ces essieux est insuffisante, et lors du choix de la traction des roues aussi sur l'autre essieu, répartir un couple nécessaire ou souhaité sur cet essieu entre les roues de cet essieu par rapport à l'adhérence à la route qui prévaut sur ces roues.

9. Véhicule à moteur selon la revendication 8, **caractérisé en ce que** l'unité de commande (18) est conçue pour répartir le couple nécessaire ou souhaité sur l'essieu rendu prioritaire entre les roues de cet essieu par rapport à l'adhérence à la route qui prévaut sur ces roues.

10. Véhicule à moteur selon la revendication 9, **caractérisé en ce que** le système de commande est conçu pour rendre prioritaire la traction des roues de l'essieu avant (9).

11. Véhicule à moteur selon la revendication 10, **caractérisé en ce que** l'essieu avant (9) du véhicule est pourvu d'un différentiel (10), qui est relié au moteur (2) au moyen d'un premier arbre de transmission (8), et qui est conçu pour être capable de répartir un couple d'entrée provenant du moteur entre les roues avant (3, 4) du véhicule proportionnellement à l'adhérence à la route qui prévaut sur ces roues.

12. Véhicule à moteur selon la revendication 11, **caractérisé en ce qu'**un deuxième arbre de transmission (13) servant à entraîner les roues arrière (5, 6) du véhicule émerge du différentiel (10), et **en ce que** le deuxième arbre de transmission (13) est relié auxdites roues arrière au moyen d'une unité de transmission finale (14).

13. Véhicule à moteur selon la revendication 12, **caractérisé en ce que** l'unité de transmission finale (14) comprend deux embrayages (42, 43), qui sont reliés chacun à une roue arrière (5, 6), et sont conçus pour transmettre un couple respectivement à chaque roue proportionnellement au degré de prise de l'embrayage correspondant.

14. Véhicule à moteur selon la revendication 13, **caractérisé en ce que** le rapport de transmission pour le deuxième arbre de transmission (13) est choisi de telle manière que le deuxième arbre de transmission tourne plus vite que les arbres (15, 16) menant aux roues arrière (5, 6), de sorte que le couple est orienté dans la même direction que sur le premier arbre de transmission (8).

15. Véhicule à moteur selon l'une quelconque des revendications 8 à 14, **caractérisé en ce qu'**un capteur d'angle (22) de volant et un capteur (23) de pédale d'accélérateur sont reliés à l'unité de commande (18) pour permettre l'entrée des intentions du conducteur pendant la conduite.

16. Véhicule à moteur selon l'une quelconque des revendications 8 à 15, **caractérisé en ce qu'**au moins l'un des types suivants de capteur est relié à l'unité de commande (18) : un capteur de vitesse (19) de roue, un capteur de couple de roue, un capteur de niveau (20), un capteur d'accélération latérale (24) et un capteur d'angle de lacet (25), pour permettre l'entrée du comportement actuel du véhicule dans l'unité de commande.

17. Véhicule à moteur selon l'une quelconque des revendications 8 à 16, **caractérisé en ce** l'unité de commande (18) est reliée au moteur (2) pour gérer le couple délivré par ce dernier.
